# EUROPÄISCHE PATENTANMELDUNG

(11) **EP 1 347 405 A1**
(43) Veröffentlichungstag der Anmeldung: **24.09.2003**
(21) Anmeldenummer: 03004614.8
(22) Anmeldetag: 01.03.2003
(51) Int. Cl.: G06K 7/00, G06K 13/08

(54) **Kartenleser**

(30) Priorität: 21.03.2002 DE 10212720
(71) Anmelder: Wincor Nixdorf International GmbH, 33106 Paderborn (DE)
(72) Erfinder: Baitz, Günter, 13629 Berlin (DE); Kamin, Hartmut, 10585 Berlin (DE)

(57) **Zusammenfassung**

Die Erfindung befasst sich damit, ein Kartenlesegerät (6) für Datenarbeitsplätze wie Kassensysteme, Drucker, Multifunktions- und Kioskterminals derart anzuordnen, dass auch Linkshänder ohne ergonomische Schwierigkeiten schnell und sicher eine Karte in ein Kartenlesegerät einführen können. Diese Aufgabe wird durch die schwenkbare Anordnung eines Kartenlesegerätes an dem Gehäuse (3) eines Datenarbeitsplatzes gelöst, so dass das Kartenlesegerät (6) in eine schräg gestellte Position verschwenkt werden kann und somit insbesondere Linkshändern eine ergonomische Bedienung des Kartenlesers ermöglicht ist.

## Beschreibung

Die Erfindung betrifft ein Kartenlesegerät für Datenarbeitsplätze wie Kassensysteme, Geldausgabeautomaten, Drucker, Multifunktions- und Kioskterminals.

Datenarbeitsplätze wie z.B. Kassensysteme sind mit Kartenlesegeräten wie Durchzugskartenleser, Chipkartenleser oder Hybridkartenleser ausgestattet, um beispielsweise eine Bezahltransaktion mit einer Bankkarte, ec-Karte oder auch Kreditkarte durchzuführen. Häufig sind derartige Kartenleser seitlich an dem Gehäuse eines Displays oder an einer Tastatur angebracht. Eine Bestätigung der durchzuführenden Transaktion findet durch eine Signierung durch den Kunden oder die Eingabe seiner PIN-Nummer statt. Allerdings sind derartige Kartenleser für Rechtshänder ausgelegt, die mit ihrer rechten Hand die Karte bedienen und diese in den Kartenleser einschieben oder durchziehen. Linkshänder haben hingegen insbesondere bei einer seitlichen Anordnung eines Kartenlesers Probleme, die Karte in den Schlitz einzuschieben oder durch einen Durchzugsleser zu ziehen.

Aufgabe der vorliegenden Erfindung ist es daher, einen Kartenleser derart anzuordnen, dass auch Linkshänder ohne ergonomische Schwierigkeiten schnell und sicher eine Karte in ein Kartenlesegerät einführen können.

Diese Aufgabe wird durch die in Anspruch 1 angegebenen Merkmale gelöst. Durch die schwenkbare Anordnung eines Kartenlesegerätes an einem Datenarbeitsplatz kann das Kartenlesegerät in eine schräg gestellte Position verschwenkt werden, so dass insbesondere Linkshändern eine ergonomische Bedienung des Kartenlesers ermöglicht ist.

Weitere Einzelheiten und Vorteile der Erfindung ergeben sich aus der nachfolgenden Beschreibung und der Zeichnung.

In der Zeichnung zeigen:
- Fig. 1:: eine perspektivische Darstellung eines Displays eines Kassensystems mit einem seitlich angeordneten Durchzugskartenleser,
- Fig 2:: eine Draufsicht auf das Display aus Fig. 1,
- Fig. 3: eine Draufsicht auf ein Display mit einem verschwenkten Durchzugskartenleser.

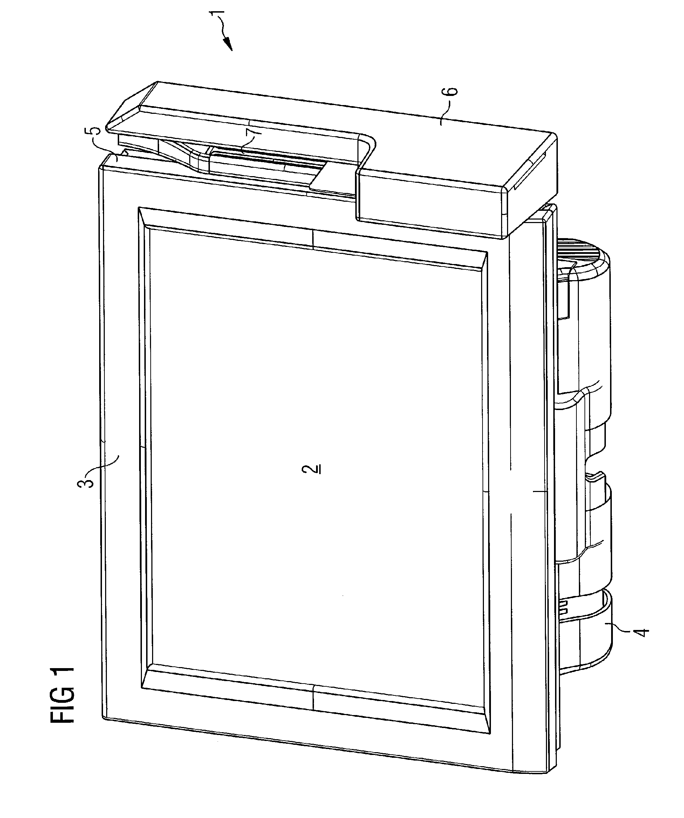

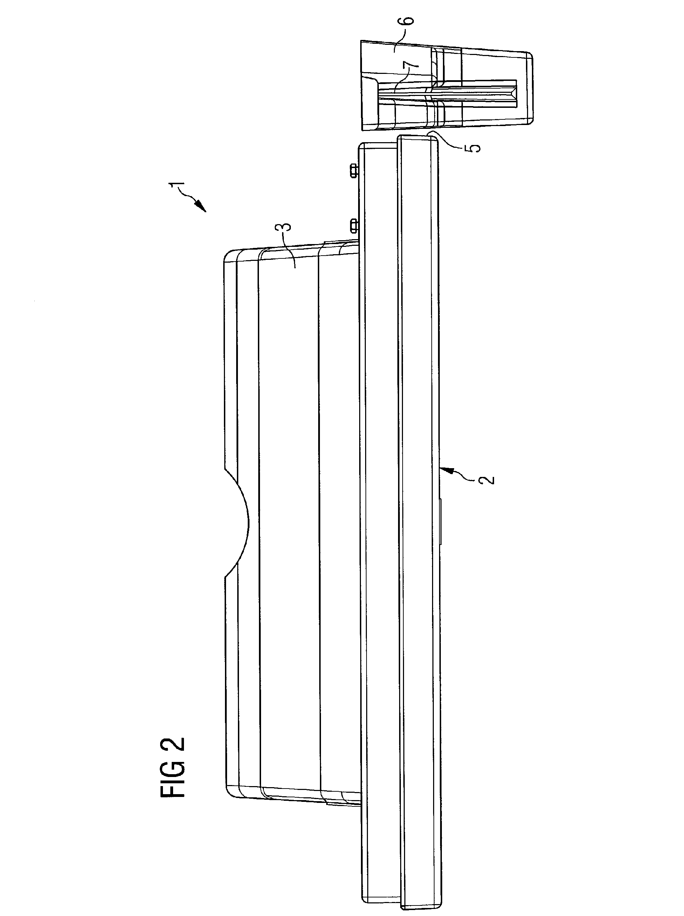

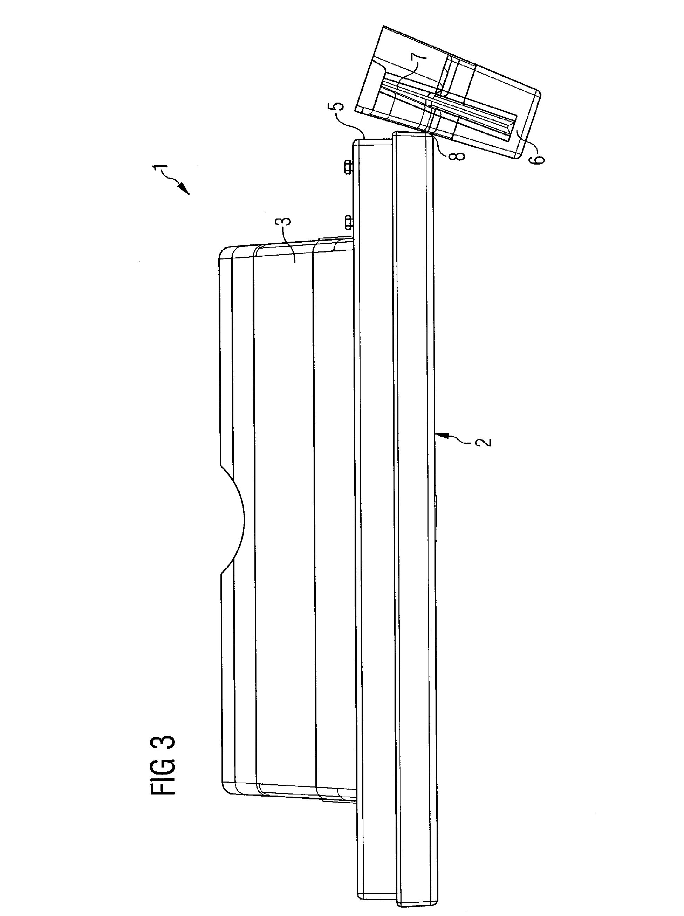

In den Fig. 1 und 2 ist ein Teil eines Kassensystems 1 dargestellt bestehend aus einem Eingabefeld 2, das als Berührungsbildschirm oder als Tastatur ausgebildet sein kann. Das Eingabefeld 2 ist von einem Gehäuse 3 umgeben, das beispielsweise mittels eines Scharniers 4 oder anderer Befestigungsmittel auf einem hier nicht näher dargestellten Sockel befestigt sein kann. An einer Seitenfläche 5 des Gehäuses 3 ist ein Durchzugskartenleser 6 mit einem Schlitz 7 angebracht, durch den eine Karte gezogen werden kann. Bei einem Rechtshänder stellt diese Anordnung kein Problem dar, da er vor dem Gerät stehend mit der rechten Hand die Karte durch den vertikal angeordneten Schlitz 7 ziehen kann. Hingegen ist es für einen Linkshänder schon bedeutend schwieriger, einen an der rechten Seitenwand des Gehäuses 3 angeordneten Schlitz 7 zu treffen. Daher ist erfindungsgemäß der Kartenleser 6 verschwenkbar an dem Gehäuse 3 angeordnet. Hierzu ist der Kartenleser 6 vorzugsweise mit einem Scharnier oder einem anderen Befestigungsmittel versehen, mit dem eine schwenkbare Befestigung an dem Gehäuse 3 des Displays 2 ermöglicht ist. Während es für einen Rechtshänder vorteilhaft ist, den Kartenleser 6 in der in der Fig. 2 dargestellten Funktion zu benutzen, kann ein Linkshänder wie in Fig. 3 dargestellt durch Verschwenken des Kartenlesers 6 um einen Drehpunkt 8 die Anordnung des Schlitzes 7 zu sich hingewandt verkippen, so dass ein Durchziehen der Karte durch den Kartenleser 6 erleichtert ist. Neben der in der Fig. 3 dargestellten Formgebung des Gehäuses 3 ist es auch denkbar, bei einer anderen Gestaltung ein Verschwenken des Kartenleser 6 in die entgegengesetzte Richtung zu ermöglichen, so dass der Schlitz 7 vom Benutzer abgewandt orientiert und hierdurch auch für Rechtshänder das Durchziehen der Karte vereinfacht ist.

Im Rahmen der Erfindung sind weitere Ausgestaltungen eines schwenkbar gelagerten Kartenlesers an dem Gehäuse eines Datenverarbeitungsgerätes wie einem Kassensystem denkbar.

## Patentansprüche

1. Kartenleser für Datenarbeitsplätze wie Kassensysteme, Geldausgabeautomaten, Drucker, Multifunktions- und Kioskterminals mit einem Gehäuse, an das ein Kartenleser befestigt ist, **dadurch gekennzeichnet, dass** der Kartenleser (6) an dem Gehäuse (3) schwenkbar gelagert befestigt ist.

2. Kartenleser nach Anspruch 1, **dadurch gekennzeichnet, dass** der Kartenleser (6) an einer senkrecht ausgerichteten Seitenwand (5) des Gehäuses (3) angeordnet ist.

3. Kartenleser nach Anspruch 1 oder 2, **dadurch gekennzeichnet, dass** der Kartenleser (6) als Durchzugskartenleser, Chipkartenleser oder Hybridkartenleser ausgebildet ist.

4. Kartenleser nach Anspruch 2, **dadurch gekennzeichnet, dass** das Gehäuse (3) ein Eingabefeld (2) umgibt.

5. Kartenleser nach Anspruch 3, **dadurch gekennzeichnet, dass** das Eingabefeld (2) als Berührungsbildschirm oder als Tastatur ausgebildet ist.
